Europäisches Patentamt

**European Patent Office**

**Office européen des brevets**

(11) Veröffentlichungsnummer: **0 168 599**

**B1**

(12) **EUROPÄISCHE PATENTSCHRIFT**

(45) Veröffentlichungstag der Patentschrift:
12.08.87

(51) Int. Cl.⁴: **B 65 G 35/00,** G 05 D 3/00

(21) Anmeldenummer: **85106393.3**

(22) Anmeldetag: **23.05.85**

(54) **Automatisches Flurfördersystem.**

(30) Priorität: **19.07.84 DE 3426599**

(43) Veröffentlichungstag der Anmeldung:
**22.01.86 Patentblatt 86/4**

(45) Bekanntmachung des Hinweises auf die Patenterteilung:
**12.08.87 Patentblatt 87/33**

(84) Benannte Vertragsstaaten:
**CH FR GB IT LI SE**

(56) Entgegenhaltungen:
**EP-A-0 135 001**
**DE-A-3 151 098**

(73) Patentinhaber: **Bryda, Roland, Wehlauerstrasse 53,
D-7500 Karlsruhe 1 (DE)**

(72) Erfinder: **Bryda, Roland, Wehlauerstrasse 53,
D-7500 Karlsruhe 1 (DE)**

(74) Vertreter: **Brommer, Hans Joachim, Dr.- Ing.,
Patentanwälte Dipl.- Ing. R. Lemcke Dr.- Ing.
H.J. Brommer Amalienstrasse 28 Postfach 4026,
D-7500 Karlsruhe 1 (DE)**

LIBER, STOCKHOLM 1987

### Beschreibung

Die Erfindung betrifft ein automatisches Flurfördersystem, bestehend aus einem selbstfahrenden, motorisch betriebenen Transportfahrzeug, dessen lenkbare Räder mechanisch oder induktiv von einer Wegleitspur gesteuert werden, wobei ungewollte Abweichungen zwischen dem Fahrzeugkurz und der Wegleitspur durch Meßglieder erfaßt und durch eine auf die Fahrzeugsteuerung einwirkende Regeleinheit zumindest annähernd auf null zurückgeführt werden.

Derart fahrerlose Flurfördersysteme werden meist elektrisch betrieben und beziehen ihre Antriebsleistung aus einer Schleifleitung, die je nach örtlichen Gegebenheiten in etwa 3 bis 4 m Höhe angeordnet ist. Stattdessen kommt jedoch auch ein Batteriebetrieb in Betracht.

Die Steuerung des Fahrzeuges erfolgt entweder durch Steuerschienen, die im allgemeinen mit der elektrischen Schleifleitung kombiniert unter der Decke angeordnet sind, wobei der Schienenkurs über eine Verbindungsstange auf die Lenkorgane des Transportfahrzeuges übertragen wird oder sie erfolgt induktiv über Steuerkabel, die meistens im Boden verlegt sind. Bei beiden Steuersystemen handelt es sich um eine nicht starre Führung des Transportfahrzeuges. Ungewollte Abweichungen zwischen der Wegleitspur und dem tatsächlichen Fahrzeugkurs sind daher unvermeidlich. Sie müssen durch eine Regeleinheit zurückgeführt werden.

Zur Rückführung des Fahrzeuges auf den Sollkurs ist ein Rechner notwendig. Er gibt aufgrund der gemessenen Abweichung (Versatz) und unter Berücksichtigung der Fahrgeschwindigkeit den jeweiligen Lenkeinschlag zur asymptotischen Annährung des Fahrzeuges an den Sollkurs in Abhängigkeit von der Wegstrecke vor. Dadurch ist eine sehr rasche Kurskorrektur und genaue Führung möglich. Diese Kursregelung ist aber wegen des erforderlichen Rechners sehr aufwendig und teuer, sie verursacht allein etwa 30 % der Fahrzeugkosten.

Hiervon ausgehend, liegt die Aufgabe der vorliegenden Erfindung darin, die bekannten automatischen Flurfördersysteme dar eingangs beschriebenen Gattung, sei es mit mechanischer oder induktiver Steuerung der Lenkräder, dahingehend zu verbessern, daß bei wesentlich geringerem Steuerungsaufwand eine genaue Einhaltung des Sollkurses und eine rasche Rückführung eventueller Kursabweichungen sichergestellt wird. Das erfindungsgemäße System soll sich insbesonders auch für derartige Steuerungen eignen, die einen von der Wegleitspur abweichenden Fahrzeugkurs gestatten, wie dies in der Patentanmeldung P 33 30 993.0 beschrieben ist.

Erfindungsgemäß wird diese Aufgabe dadurch gelöst, daß die Erfassung der Kursabweichung einseits durch Messung des Querversatzes, andererseits durch Messung des Winkels zwischen Fahrzeuglängsachse und Wegleitspur erfolgt und daß die beiden sich aus diesen Meßwerten ergebenden Lenkbefehle in der Regeleinheit zu einem resultierenden Lenkbefehl addiert werden.

Untersuchungen des Anmelders haben ergeben, daß je nach Art und Ausmaß der Kursabweichung teilweise Lenkbefehle notwendig sind, die, wenn sie das raschestmögliche Rückführen auf den Sollkurs sicherstellen sollen, mit Proportionalreglern nicht realisierbar sind. Wird jedoch Art und Ausmaß der Abweichung dahingehend aufgeschlüsselt, daß man einerseits den Querversatz, andererseits die Winkeldifferenz zwischen Fahrzeuglängsachse und Wegleitspur mißt, so ergeben sich hieraus Lenkbefehle, deren Addition in idealer Weise eine Rückführung des Fahrzeuges auf den Sollkurs gestattet, ohne daß es zu dem bei herkömmlichen Reglern üblichen Pendeln des Fahrzeuges um den Sollkurs kommt.

Ein weiterer Vorteil der Erfindung besteht darin, daß man mit relativ kostengünstigen Proportionalreglern arbeiten kann, so daß sich das Fördersystem im Vergleich zu rechnergesteuerten System durch wesentlich günstigere Herstellungskosten auszeichnet, ohne daß die Güte des Regelverhaltens geringer ist.

Wird das erfindungsgemäße Regelsystem bei Förderanlagen eingesetzt, bei denen die Wegleitspur aus unterhalb des Deckenbereiches verlegten Steuerschienen besteht, mit denen das Fahrzeug durch eine zumindest querverschwenkbar angelenkte, längenverstellbare Verbindungsstange verbunden ist und zur Herbeiführung gewollter Kursabweichungen eine weitere, im Schienenbereich angeordnete Bahnkurve auf ein an der Verbindungsstange oder Zubehörteilen beweglich geführtes Referenzglied einwirkt, dessen Verstellungen relativ zur Verbindungsstange durch die Regeleinheit auf null zurückführbar sind, wie es in der Patentanmeldung P 33 30 993.0 beschrieben ist, so erfolgt die Messung der beiden für den Kurs maßgeblichen Größen zweckmäßigerweise dadurch, daß der Querversatz durch Messung des Winkels zwischen Referenzglied und Verbindungsstange, der Winkel des Fahrzeuges durch Messung des Torsionswinkels der Verbindungsstange bestimmt wird und beide Größen der Regeleinheit zugeführt werden. Auf diese Weise ist sichergestellt, daß die gewollten Kursänderungen nicht als Störgrößen angesehen und zum Anlaß einer Kurskorrektur genommen werden, sondern lediglich die ungewollten Kursänderungen berücksichtigt werden. Für die Messung des Winkels zwischen Referenzglied und Verbindungsstange kann auf die in der genannten älteren Patentanmeldung beschriebenen Maßnahmen zurückgegriffen werden. Für die Messung des Torsionswinkels empfiehlt es sich, in die Verbindungsstange ein Drehgelenk mit Winkelmeßglied einzubauen.

Weitere Merkmale und Vorteile der Erfindung ergeben sich aus der nachfolgenden Beschreibung von Ausführungsbeispielen anhand der Zeichnung; dabei zeigt:

Fig. 1 eine Ansicht des Transportfahrzeuges mit den zugehörigen Strom- und Steuerschienen in Fahrtrichtung gesehen;

Fig. 2 eine Seitenansicht gemäß Fig. 1;

Fig. 3 Kursabweichungen des Fahrzeuges in Form eines Querversatzes und der hieraus jeweils resultierende Lenkeinschlag;

Fig. 4 Kursabweichungen des Fahrzeuges in Form von Winkeldifferenzen mit den dazugehörigen Lenkeinschlägen;

Fig. 5 den Verlauf des sich bei Berücksichtigung des Querversatzes und der Winkeldifferenzen ergebenden Lenkauschlages bei der Rückführung des Fahrzeuges;

Fig. 6 ein Ausführungsbeispiel für die Messung der Kursabweichung bei einem induktiv gesteuerten Fahrzeug;

Fig. 7 ein Ausführungsbeispiel für die Messung der Kursabweichung bei einem unterflurschienengelenkten Fahrzeug und

Fig. 8 das Ablaufschema der Regeleinheit.

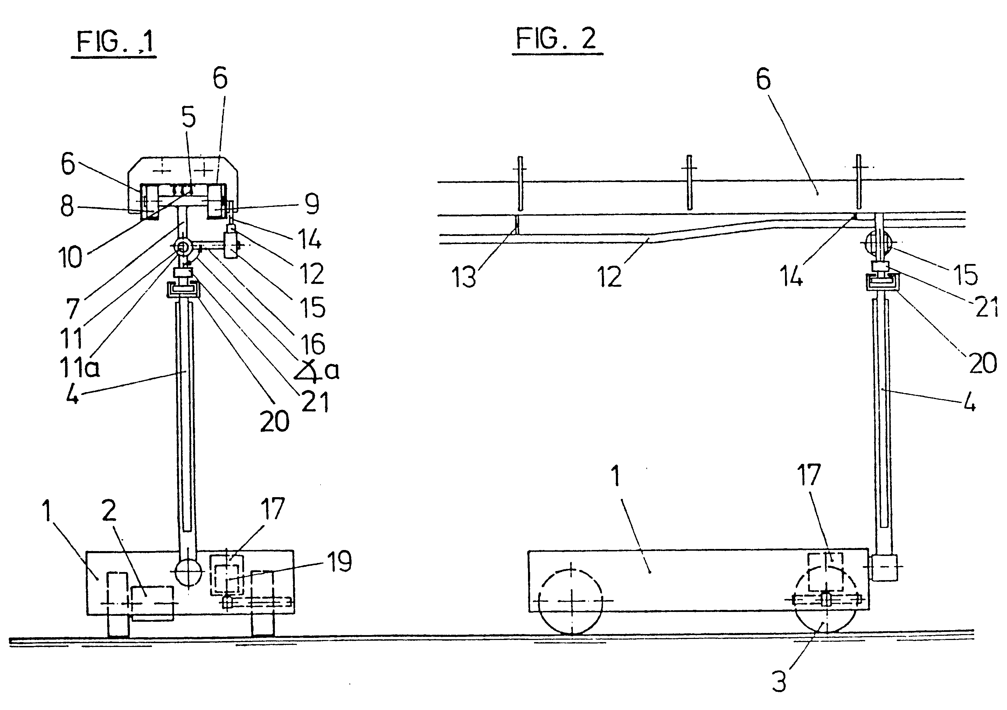

Die Fig. 1 und 2 zeigen jeweils ein Transportfahrzeug 1, des mit einer elektrischen Antriebseinheit 2 ausgerüstet ist und dessen Laufräder 3 lenkbar sind.

Zur Stromversorgung und zur Steuerung ist der Transportwagen 1 über eine Verbindungsstange 4 mit Strom- und Steuerschienen 5 bzw. 6 verbunden. Die Verbindungsstange 4 ist teleskopartig ausgebildet und an ihrem unteren Ende zumindest quer zur Fahrtrichtung schwenkbar am Transportwagen 1 angelenkt. Ihr oberes Ende ist als Laufwagen 7 ausgebildet, dessen axial benachbarte Laufräder 8 und 9 in entsprechenden, einander gegenüberstehenden Steuerschienen 6 laufen. Außerdem trägt der Laufwagen 7 Schleifkontakte 10, die die elektrische Verbindung zwischen der Stromschiene 5 und dem Antriebsmotor 2 herstellen.

Die Verbindung des Laufwagens 7 mit der Verbindungsstange 4 erfolgt über ein Gelenk 11, das Schwenkbewegungen zumindest quer zur Fahrtrichtung zuläßt. Außerdem ist die Verbindungsstange 4 durch ein Drehgelenk geteilt, dessen Drehachse mit der Verbindungsstange fluchtet. An dieses Drehgelenk ist ein Winkelmeßglied 21 angeschlossen, um Kursabweichungen in Farm von Winkeldifferenzen zwischen der Fahrzeuglängsachse und den Steuerschienen 6 zu messen. Selbstverständlich muß hierzu der unterhalb des Drehgelenkes 20 befindliche Teil der Verbindungsstange 4 insoweit drehfest mit dem Fahrzeug 1 verbunden sein, daß sich dessen Winkeldifferenzen in einer Verdrehung des unteren Teiles der Verbindungsstange 4 relativ zu dem undrehbaren Winkelmeßglied 21 bemerkbar machen.

An den zu einer Einheit zusammengefaßten Strom- und Steuerschienen 5 bzw. 6 ist außerdem eine Bahnkurve 12 montiert. Diese Bahnkurve 12 ist beispielsweise über Laschen 13 und 14 in einfacher Weise höhenverstellbar und auch austauschbar. An ihrer Unterseite läuft ein Referenzglied in Form einer Rolle 15 ab, die über einen arm 16 vertikal verschwenkbar an dem Gelenk 11 der Verbindungsstange gelagert ist. Außerdem befindet sich an dem Gelenk 11 eine Winkelmeßeinrichtung 11a für den Winkel a zwischen dem Arm 16 und der Verbindungsstange 4. Die Winkelmeßeinrichtung 11a hat die Aufgabe, den Querversatz einer eventuellen ungewollten Kursabweichung des Fahrzeuges zu messen.

Weicht die Längsrichtung des Fahrzeuges 1 von der Richtung der Steuerschienen 6 ab, so stellt sich an dem Drehgelenk 20 eine bestimmte Winkeldifferenz vom Sollwert ein, die von dem Meßglied 21 gemessen und einer Regeleinheit 19 zugeführt wird.

Meist liegt auch eine Kursabweichung des Fahrzeuges 1 in Form eines Querversatzes vor. Die Verbindungsstange 4 befindet sich dann in einer seitlich herausgeschwenkten Lage relativ zu dem Laufwagen 7. Das Ausmaß dieser seitlichen Verschwenkung wird in der Winkelmeßeinrichtung 11a gemessen und ebenfalls der Regeleinheit 19 zugeführt.

Soll das Fahrzeug 1 auf einen von den Steuerschienen abweichenden Kurs gebracht werden, so wird die Bahnkurve 12 in ihrem Niveau entsprechend verlagert, in Fig. 2 beispielsweise nach unten gezogen. Dadurch wird auch das Referenzglied in Form der Rolle 15 nach unten geschwenkt und der Winkel a verkleinert sich. Das Winkelmeßgerät 11a gibt diesen neuen Winkelwert in die Regeleinheit, die entsprechend der Abweichung vom Sollwert einen Lenkbefehl an den Lenkmotor 17 gibt, in dem Sinne, daß der Winkel a wieder die ursprünglichen 90° einnimmt. Das Fahrzeug fährt dann mit einem bestimmten seitlichen Versatz parallel zu den Steuerschienen 6. Dieser Versatz ist jedoch gewollt und - da dabei der Winkel a seinen Sollwert von 90° beibehält - geht er nicht mehr als Störgröße in die Regeleinheit ein, solange die Bahnkurve 12 auf dem abgesenkten Niveau weiterläuft.

Soll das Fahrzeug wieder auf den Steuerkurven-Kurs zurückgeführt werden, so wird die Bahnkurve 12 auf das alte Niveau angehoben, worauf sich automatisch über die Regeleinheit die entsprechenden Änderungen im Lenkeinschlag des Fahrzeuges einstellen, wie dies anhand der folgenden Figuren näher beschrieben wird.

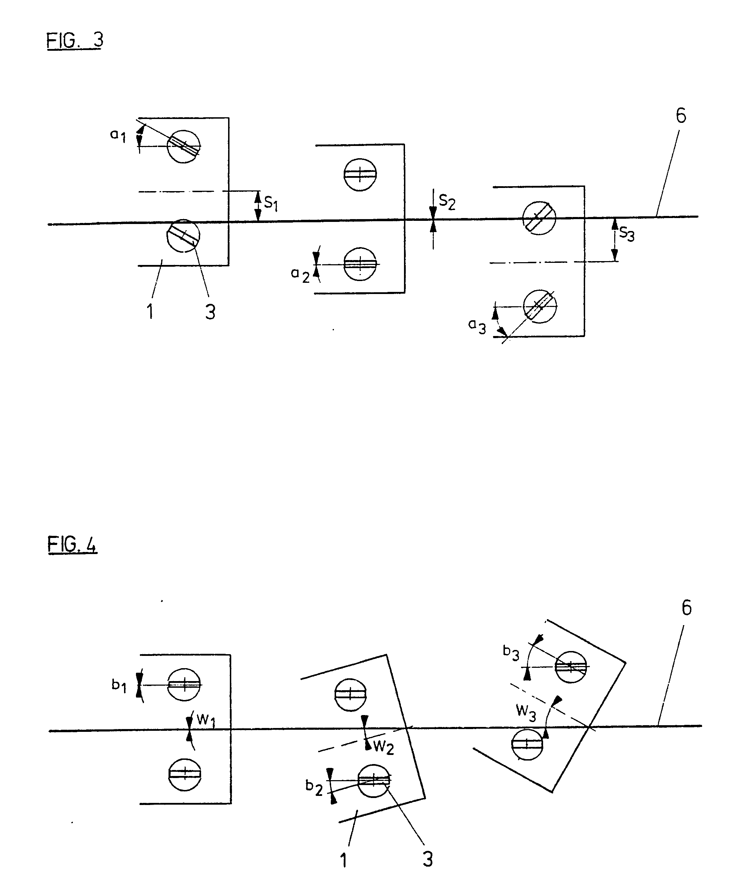

Die Fig. 3 und 4 zeigen schematisch die teilweise gegensätzlichen Lenkbefehle, die durch Kursabweichungen des Fahrzeuges infolge eines Versatzes einerseits oder infolge von Winkeldifferenzen andererseits ausgelöst werden. Selbstverständlich können jedoch die beiden Lenkbefehle auch gleichgerichtet sein. Die aus dem Querversatz s resultierenden Lenkbefehle sind jeweils mit a, die aus

3

Winkeldifferenzen resultierenden Lenkbefehle jeweils mit b an den Lenkrädern eingezeichnet. Bezugslinie ist dabei jeweils die Fahrzeuglängsachse in Relation zur Wegleitspur, in diesem Falle also zur Steuerschiene 6.

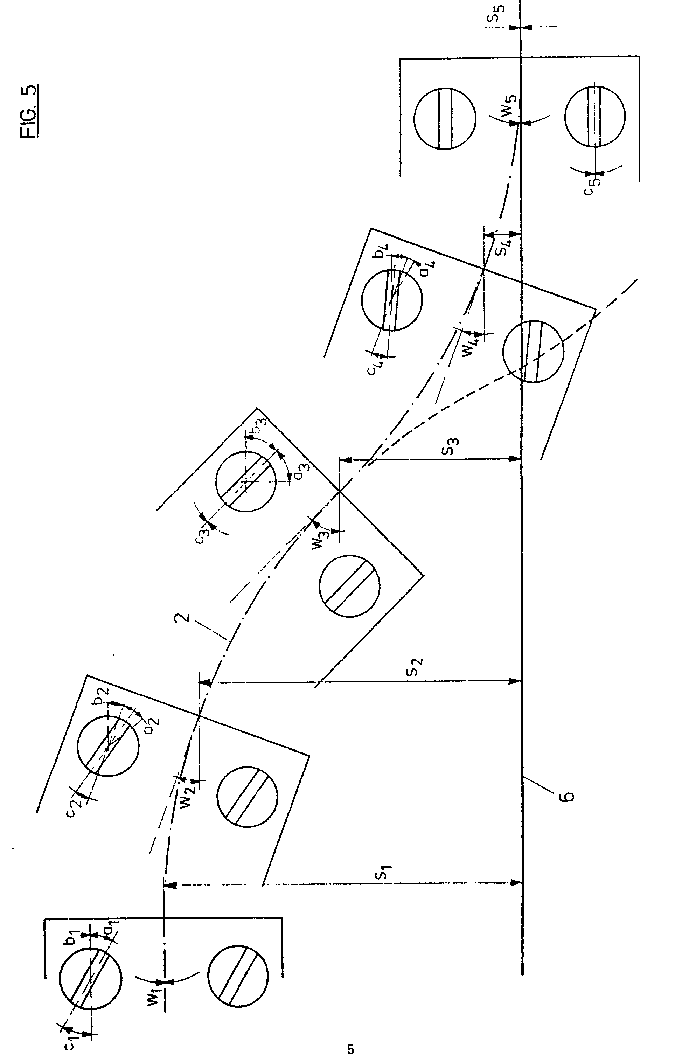

Die Addition der unterschiedlichen Lenkbefehle ist aus Fig. 5 ersichtlich. Das Fahrzeug befindet sich hier zunächst in einer Kursabweichung, die sich allein in einem Querversatz $s_1$ ausdrückt, wohingegen keine Winkeldifferenz vorliegt. Der Querversatz $s_1$ löst einen Lenkausschlag $c_1$ aus, der allein durch den Querversatz bestimmt wird und daher dem Lenkbefehl $a_1$ entspricht. Nach einer gewissen Fahrstrecke hat sich der Querversatz auf $s_2$ verringert, dafür hat sich die Winkeldifferenz $w_2$ eingestellt. Der resultierende Lenkeinschlag $c_2$ basiert in diesem Falle aus der Überlagerung der gegensätzlichen Lenkbefehle $a_2$ und $b_2$. Das bedeutet, daß durch die Drehung des Fahrzeuges selbst der noch erforderliche Lenkausschlag reduziert wird.

Mit weiter zunehmender Fahrstrecke erreicht das Fahrzeug eine Winkeldifferenz von 45° relativ zur Steuerschiene 6. Der vom Querversatz $s_3$ ausgelöste Lenkausschlag $a_3$ und der von der Winkeldifferenz $w_3$ ausgelöste Lenkeinschlag $b_3$ heben sich in diesem Falle auf.

Mit weiterer Annäherung an die Steuerschienen überwiegt der Lenkausschlag in Gegenrichtung, da der Einfluß des Querversatzes $s_4$ kleiner wird als der der Winkeldifferenz $w_4$. Das Fahrzeug wird dadurch ohne Kreuzen der Steuerschiene asymptotisch an sie herangeführt. Die Endposition ist durch den Index 5 bezeichnet.

Die gestrichelte Linie zeigt den Fahrzeugkurs bei herkömmlicher Regelung. Das Fahrzeug pendelt in diesem Falle mehrfach um den Sollkurs herum, benötigt also eine wesentlich längere Fahrstrecke und Fahrzeit, ehe die Sollposition erreicht ist.

Damit die bei einer gewollten Kursänderung sich ergebende Winkeldifferenz nicht einen gegengerichteten Lenkbefehl auslöst, der in der Größenordnung des von der versetzten Bahnkurve 12 ausgelösten Lenkbefehls liegt und somit das Erreichen des seitlich versetzten Sollkurses erschwert, kann man die Bahnkurve 12 zunächst stärker versetzen, also eine Überreaktion hervorrufen und erst nach einer gewissen Wegstrecke die Bahnkurve auf des der gewünschten Kursabweichungen entsprechende Niveau legen.

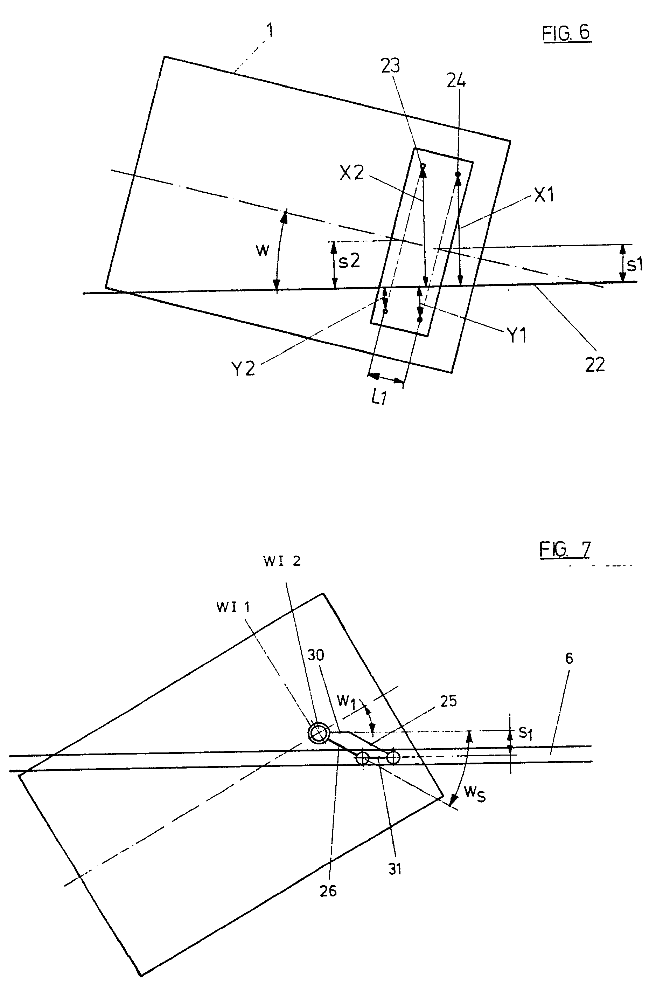

Das gleiche Regelungssystem eignet sich auch für induktiv gesteuerte Fahrzeuge, da diese wegen des benötigten Rechners außerordentlich teuer sind. Eine hierfür geeignete Erfassung der Kursabweichung ist in Fig. 6 dargestellt. Die Steuerung des Fahrzeuges soll in diesem Falle durch eine induktive Wegleitspur 22 erfolgen. Außer dem ohnehin erforderlichen Sensorpaar 23 braucht lediglich ein weiteres Sensorpaar 24 zugeschaltet zu werden, wobei beide Sensorpaare symmetrisch zur Fahrzeuglängsachse angeordnet sind. Sie erlauben einerseits die Messung des Winkels w, andererseits die Messung des Querversatzes s, da ihre jeweiligen Abstände untereinander bekannt und konstant sind. Dabei gilt
$s_1 = (X_1 + Y_1)/2$ und $s_2 = (x_2 + y_2)/2$ und
$\sin w = (s_2 + s_1)/L1$,
wobei x, y, $s_1$ und $s_2$ vektoriell gerichtete Größen sind.

Fig. 7 zeigt die entsprechende Messung bei einem spurgeführten Fahrzeug, das beispielsweise längs Steuerschienen 6 läuft wie in den Fig. 1 und 2. Dabei ist ein Schlepphebel 26 schwenkbar am Fahrzeug gelagert. Er trägt an seinem freien Ende ein in der Steuerschiene 6 laufendes Rad. Hieran ist über eine Verbindungsstange 31 ein weiteres, in der Schiene 6 laufendes Rad angelenkt, das seinerseits über gelenkig miteinander verbundene Hebel 25 und 30 mit dem Anlenkpunkt des Schlepphebels 26 verbunden ist. Durch die Parallelanordnung der Hebel 25 und 26 einerseits und der Hebel 30 und 31 andererseits ist sichergestellt, daß die Verbindungsstange 30 stets parallel zur Führungsschiene 6 verläuft. Dadurch kann auf einfache Weise mit dem Winkelmeßgerät WI 1 der Winkel $W_s$ gemessen werden, der zwischen dem Schlepphebel 26 und der Verbindungsstange 30 besteht und den Fahrzeugversatz repräsentiert, während das Winkelmeßgerät WI 2 den Winkel $W_1$ erfaßt, der zwischen der Verbindungsstange 30 und der Fahrzeuglängsachse gebildet wird und den Winkelversatz des Fahrzeuges repräsentiert. Aus dem Winkel $W_s$ läßt sich der Versatz nach folgender Gleichung bestimmen:
$\sin W_s = s_1/L_2$,
wobei $L_2$ die Länge des Schlepphebels 26 ist.

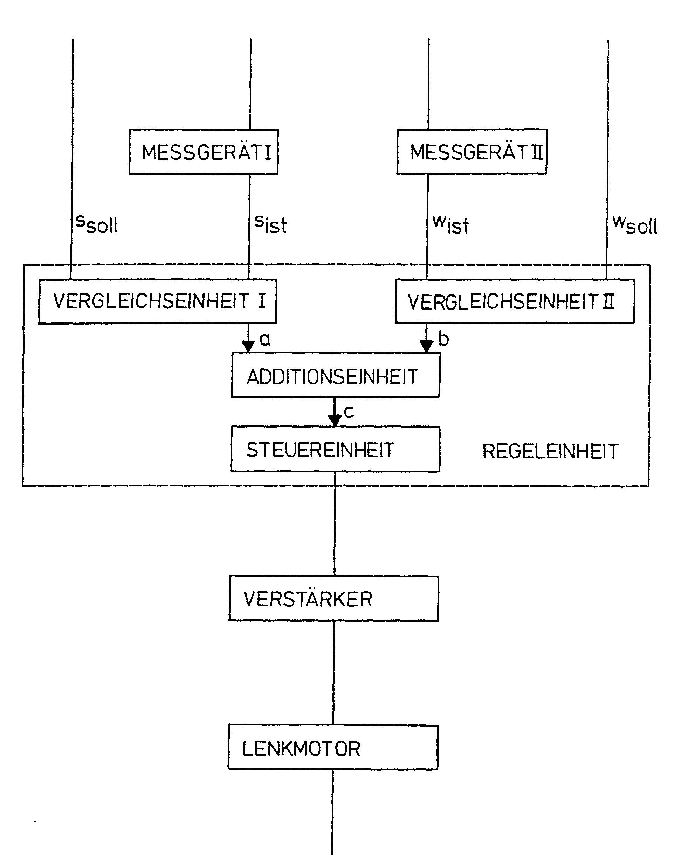

Fig. 8 zeigt das Ablaufschema der Regeleinheit. Die Meßwerte s für den Querversatz werden einer Vergleichseinheit I, die Meßwerte w für die Winkeldifferenz einer Vergleichseinheit II zugeführt. Beide Vergleichseinheiten geben entsprechend der Abweichung zwischen Ist-Wert und Soll-Wert ein Signal an eine gemeinsame Additionseinheit. In ihr werden die fiktiven Lenkbefehle a bzw. b gemäß Fig. 5 zu einem resultierenden Lenkbefehl c verarbeitet, der schließlich über eine Steuereinheit und einen Verstärker an den Lenkmotor 17 des Fahrzeuges gegeben wird.

**Patentansprüche**

1. Automatisches Flurfördersystem, bestehend aus einem selbstfahrenden, motorisch betriebenen Transportfahrzeug (1), dessen lenkbare Räder (3) mechanisch oder induktiv von einer Wegleitspur (16, 22) gesteuert werden, wobei ungewollte Abweichungen zwischem dem Fahrzeugkurs und der Wegleitspur durch Meßglieder (11a, 21) erfaßt und durch eine auf die Fahrzeugsteuerung einwirkende Regeleinheit (19) zumindest annähernd auf Null zurückgeführt werden, dadurch gekennzeichnet,

daß die Erfassung der Kursabweichung einerseits durch Messung des Querversatzes (s), andererseits durch Messung des Winkels (w) zwischen Fahrzeuglängsachse und Wegleitspur (6, 22) erfolgt und daß die beiden sich aus diesem Meßwerten ergebenden Lenkbefehle in der Regeleinheit zu einem resultierenden Lenkbefehl addiert werden.

2. Flurfördersystem nach Anspruch 1, wobei die Wegleitspur (6) aus unterhalb des Deckenbereiches verlegten Steuerschienen besteht, mit denen das Fahrzeug (1) durch eine zumindest querverschwenkbar angelenkte, längenverstellbare Verbindungsstange (4) verbunden ist und zur Herbeiführung gewollter Kursabweichungen eine weitere, im Schienenbereich angeordnete Bahnkurve (12) auf ein an der Verbindungsstange (4) oder Zubehörteilen beweglich geführtes Referenzglied (15, 16) einwirkt, dessen Verstellungen relativ zur Verbindungsstange (4) durch die Regeleinheit (19) auf Null zurückführbar sind, dadurch gekennzeichnet, daß der Querversatz (s) durch Messung des Winkels (a) zwischen Referenzglied (15, 16) und Verbindungsstange (4), der Winkel (w) durch Messung des Torsionswinkels an der Verbindungsstange (4) bestimmbar ist und beide Größen (s und w) der Regeleinheit (19) zuführbar sind.

3. Flurfördersystem nach Anspruch 2, dadurch gekennzeichnet, daß in die Verbindungsstange (4) ein Drehgelenk (20) mit Winkelmeßglied (21) eingebaut ist.

4. Flurfördersystem nach Anspruch 1, wobei die Steuerung induktiv erfolgt, dadurch gekennzeichnet, daß das Fahrzeug mindestens zwei in Längsrichtung aufeinanderfolgende Sensorpaare (23, 24) aufweist.

5. Flurfördersystem nach Anspruch 1, wobei die Steuerung durch mit Steuerschienen in Eingriff gehaltene Schlepphebel erfolgt, dadurch gekennzeichnet, daß zwei Schlepphebel (26, 30) von einem gemeinsamen Gelenk ausgehen und mittels zweier weiterer endständig angelenkter Schwenkhebel (25, 31) eine Parallelogrammführung bilden, wobei der eine Schlepphebel (31) mittels zweier Laufräder parallel zur Steuerschiene (6 bzw. 12) geführt ist.

characterised in that

the detection of a course deviation is effected on the one hand by measure of the transverse displacement (s) and on the other hand by measurement of the angle (w) between the longitudinal axis of the vehicle and the path guide track (6, 22), and the two steering commands resulting from these measured values are added in the regulating unit to form a resultant steering command.

2. Floor conveyor system according to claim 1, in which the path guide track (6) comprises control rails which are laid beneath the cover region and with which the vehicle (1) is connected by way of an adjustable-length connection rod (4) that is mounted to pivot at least transversely, and in order to bring about desired course deviations a further track (12), arranged in the region of the rails, acts upon a reference member (15, 16) that is movably guided on the connection rod (4) or attachments thereto, the displacements of which relative to the connection rod (4) can be reduced to zero by the regulating unit (19), characterised in that the transverse displacement (s) can be determined by measurement of the angle (a) between the reference member (15, 16) and the connection rod (4), and the angle (w) can be determined by measurement of the angle of torsion at the connection rod (4), and the two variables (s and w) can be supplied to the regulating unit (19).

3. Floor conveyor system according to claim 2, characterised in that the connection rod (4) incorporates a swivel joint (20) having an angle measuring member (21).

4. Floor conveyor system according to claim 1, in which control is effected inductively, characterised in that the vehicle has at least two pairs of sensors (23, 24) arranged one after the other in the longitudinal direction.

5. Floor conveyor system according to claim 1, in which control is effected by means of drag levers held in engagement with control rails, characterised in that two drag levers (26, 30) originate from a common joint and form a parallelogram guide means by means of two further pivot levers (25, 31) articulated at their ends, one drag lever (31) being guided parallel to the control rail (6 or 12) by means of two running wheels.

## Claims

1. Automatic floor conveyor system consisting of a selfpropelled, motor-driven transport vehicle (1) of which the steerable wheels (3) are controlled mechanically or inductively by a path guide track (6, 22), undesired differences between the course of the vehicle and the path guide track being detected by measuring elements (11a, 21) and being reduced at least approximately to zero by a regulating unit (19) acting on the vehicle control means,

## Revendications

1. Système de manutention automatique, se composant d'un véhicule automobile de transport (1) entraîné par un moteur et dont les roues directrices (3) sont commandées mécaniquement ou inductivement par une voie directrice (6, 22), auquel cas des écarts non intentionnels entre la course suivie par le véhicule et la voie directrice (6, 22) sont captés par des organes de mesure (11, 21) et sont ramenés au moins approximativement à zéro par une unité (19) de régulation agissant sur la commande du véhicule, caractérisé en ce que le captage de l'écart de trajectoire est effectué, d'une part, par une mesure du décalage transversal (s) et, d'autre part, par une mesure de l'angle (w) entre l'axe longitudinal du véhicule et la voie directrice (6, 22) et en ce que les deux ordres de direction produits à partir de ces valeurs de mesure sont additionnés dans l'unité de régulation sous la forme d'un ordre de direction résultant.

2. Système de manutention selon la revendication 1, où la voie directrice (6) se compose de rails de commande disposés en dessous de la zone de plafond et avec lesquels le véhicule (1) est relié par une tige de liaison (4), réglable en longueur et articulée de façon à pouvoir pivoter au moins transversalement, tandis qu'il est prévu, pour produire des écarts intentionnels de trajectoire, une autre voie directrice (12) placée dans la zone des rails et agissant sur un organe de référence (15, 16) guidé dans son mouvement sur la tige de liaison (4) ou sur des accessoires et dont les déplacements par rapport à la tige de liaison (4) peuvent être ramenés à zéro par l'unité de régulation (19), caractérisé en ce que le décalage transversal (s) peut être déterminé par une mesure de l'angle (a) entre l'organe de référence (15, 16) et la tige de liaison (4), l'angle (w) peut être déterminé par une mesure de l'angle de torsion dans la barre de liaison (4) et les deux grandeurs (s) et (w) peuvent être appliquées à l'unité de régulation (19).

3. Système de manutention selon la revendication 2, caractérisé en ce que dans la tige de liaison (4) est incorporée une articulation tournante (20) comportant un organe de mesure d'angle (21).

4. Système de manutention selon la revendication 1, dont la commande est effectuée inductivement, caractérisé en ce que le véhicule comporte au moins deux paires de capteurs (23, 24) placées l'une à la suite de l'autre dans la direction longitudinale.

5. Système de manutention selon la revendication 1, dont la commande est effectuée au moyen de leviers d'entrainement maintenus en prise avec des rails de commande, caractérisé en ce que deux leviers d'entraînement (26, 30) partent d'une articulation commune et constituent, au moyen de deux autres leviers d'entraînement (25, 31) articulés à leurs extrémités, un système de guidage en parallélogramme, un des leviers d'entraînement (31) étant guidé au moyen de deux roues directrices parallèlement au rail de commande (6 ou 12).

FIG. 1

FIG. 2

0 168 599

FIG. 3

FIG. 4

FIG. 5

0 168 599

FIG. 6

FIG. 7